# EUROPÄISCHE PATENTSCHRIFT

(11) **EP 2 789 840 B1**
(45) Veröffentlichungstag und Bekanntmachung des Hinweises auf die Patenterteilung: **12.04.2017**
(21) Anmeldenummer: 14154642.4
(22) Anmeldetag: 11.02.2014
(51) Int. Cl.: F02M 26/59, F02M 26/61, F02M 26/70

(54) **Anordnung zur Abgasrückführung**
System for exhaust gas recirculation
Dispositif destiné à la recirculation des gaz d'échappement

(30) Priorität: 12.04.2013 DE 102013103688
(43) Veröffentlichungstag der Anmeldung: 15.10.2014
(73) Patentinhaber: Pierburg GmbH, 41460 Neuss (DE)
(72) Erfinder: Hambloch, Stephan, 52459 Inden/Altdorf (DE); Baumeister, Lars, 41334 Nettetal (DE); Jasper, Jessica, 47799 Krefeld (DE)
(74) Vertreter: Patentanwälte ter Smitten Eberlein Rütten Partnerschaftsgesellschaft

(56) Entgegenhaltungen:
- EP-A2- 1 098 085
- CN-U- 201 739 030
- DE-U1-202005 019 518

## Beschreibung

Die Erfindung betrifft eine Anordnung zur Abgasrückführung für eine Verbrennungskraftmaschine mit einem Gehäuse, mindestens einem im Gehäuse angeordneten Rückschlagventil mit Klappenelementen sowie einem Kanal mit Umlenkungen.

In modernen Verbrennungsmotoren wird Abgas in den Verbrennungsprozess zurückgeführt, um den Ausstoß von Schadstoffen zu verringern. Aufgrund von Pulsationen kann der Druck in der Abgasrückführleitung zeitweise niedriger sein als der Druck in der Ladeluftleitung. Um ein Rückströmen der Abgase zu verhindern, werden Rückschlagventile in der Abgasrückführleitung verbaut.

Aus der DE 199 53 198 A1 ist ein solches Rückschlagventil bekannt, das als Flatterventil ausgebildet ist und dadurch besonders gut für den Einsatz in der Abgasrückführung geeignet ist.

Aus der WO 2011 128 194 A1 ist ein Abgaskühlmodul bekannt das zwei Klappenelementpaare aufweist die als Rückschlagventile arbeiten. Um den begrenzten Bauraum optimal zu nutzen sind die Kanäle in der Regel nicht gerade ausgebildet, sondern den Bauraumanforderungen angepasst und weisen deswegen Umlenkungen und Querschnittssprünge auf. Durch diese Umlenkungen wie auch durch die Rückschlagventile selber treten starke Verwirbelungen auf. Diese Verwirbelungen bedingen Druckverluste, die sich negativ auf die Menge des rückgeführten Abgases und damit auf die Effizienz der Abgasrückführung auswirken und deswegen minimiert werden müssen.

Ein weiteres Beispiel einer solchen Anordnung ist in dem Dokument DE 20 2005 019518 U1 gezeigt.

Es stellt sich daher die Aufgabe, eine kompakte Anordnung zur Gehäuse stetig ist und sich stromabwärts des Rückschlagventils mindestens eine Trennwand entlang der Umlenkung erstreckt und den Rückschlagventile erzeugen große Wirbel hinter dem Rückschlagventil. Die angestrebte, dem beschränkten Bauraum geschuldete, nicht des Kanals wird dieser in Unterkanäle aufgeteilt. Es können sich trotz der Umlenkung und der Rückschlagventile lediglich kleinere Wirbel in den Unterkanälen ausbilden, wodurch der Druckverlust minimiert und die Durchtrittsöffnung auf, auf der ein Blattfederelement und ein die Öffnung des Blattfederelements begrenzender Gegenhalter mittels Schrauben befestigt ist.

Diese Bauform verhindert eine zu weite Öffnung und eine dadurch bedingte Beschädigung des Blattfederelements und wirkt sich somit positiv auf die Lebensdauer des Klappenelements aus. Zudem ist die Befestigung mittels Schrauben einfach und kostengünstig zu realisieren und ermöglicht einen einfachen Austausch einzelner Komponenten des Vorzugsweise besteht das Rückschlagventil aus zwei, zueinander trapezförmig angeordnet Klappenelementen.
Diese trapezförmige Anordnung der Klappenelemente zueinander ist strömungstechnisch besonders vorteilhaft.

In einer weiteren bevorzugten Ausführungsform sind mehrere, jeweils zueinander trapezförmig angeordnete Klappenelemente der Rückschlagventile in einer Reihe angeordnet.
Durch die Erhöhung der Anzahl der Klappenelemente vergrößert sich die verfügbare Durchtrittsfläche und somit das rückführbare Abgas-Volumen.

In einer weiteren bevorzugten Ausführungsform sind im Gehäuse mehrere Rückschlagventile angeordnet und ein stromaufwärtiges Ende der zumindest einen ersten Trennwand ist im Ausströmungsbereich der Rückschlagventile zwischen den Rückschlagventilen angeordnet.
Durch die Verwendung mehrerer Rückschlagventile ist es sehr einfach möglich, bei einer Fehlfunktion statt eines mehrflutigen Rückschlagventils nur eins von mehreren Rückschlagventilen zu ersetzen. Zudem verhindert das stromaufwärtige Ende der zumindest einen ersten Trennwand im Ausströmungsbereich der Rückschlagventile zwischen den Rückschlagventilen ein Zusammenfließen der einzelnen Teilströme und dadurch bedingte Wirbel.

In einer weiteren bevorzugten Ausführungsform ist senkrecht zu der Ebene, in der die Umlenkung ausgebildet ist, eine erste Trennwand angeordnet, die sich vom Ausströmungsbereich der Klappenelemente bis mindestens zum Ende der Umlenkung erstreckt, so dass sie den Kanal in Unterkanäle aufteilt, die an einem stromaufwärtigen und einem stromabwärtigen Ende der ersten Trennwand im Wesentlichen gleich große Durchströmungsquerschnitte aufweisen.
Dadurch, dass die Durchströmungsquerschnitte an den beiden Enden der ersten Trennwand gleich groß sind, bleiben die Abgasmassenströme annähernd gleich, was eine besonders gleichgerichtete und verwirbelungsarme Durchströmung bedingt.

In einer anderen bevorzugten Ausführungsform weist die erste Trennwand eine stetige Krümmung auf.
Dadurch wird die negative Auswirkung einer unvermeidbaren Krümmung minimiert, insbesondere strömungsverändernde Querschnittssprünge werden vermieden.

In einer vorteilhaften Ausgestaltung der Erfindung verläuft die erste Trennwand in einem stromabwärtigen Endbereich parallel zu der Hauptströmungsrichtung im Kanal.
Auf diese Weise wird eine annähernd störungsfreie Strömungsführung durch das Kanalgehäuse erreicht und der Druckverlust wird minimiert.

In einer alternativen Ausführungsform ist die erste Trennwand als pfeilförmiges Einbauelement ausgebildet und der Pfeilschaft erstreckt sich vom Anfang des Kanals bis zum stromabwärtigen Ende der Klappenelemente, wobei die der Wand zugewandten Außenflächen der Pfeilarme eine Krümmung in derselben Richtung wie die Konturen der jeweils benachbarten Wand aufweisen.
Durch die pfeilförmige Ausgestaltung werden wirbelfördernde Toträume zwischen den Klappenelementen vermieden. Durch den Konturen der Wand angepasste Außenflächen der Pfeilarme im sich verjüngenden Umlenkungsbereich des Kanals werden die Durchströmungsquerschnitte annähernd konstant gehalten sowie Querschnittssprünge vermieden.

In einer weiterführenden bevorzugten Ausführungsform weisen die durch die Wand und die der Wand zugewandten Außenflächen der Pfeilarme gebildeten Unterkanäle an ihren stromaufwärtigen und stromabwärtigen Enden im Wesentlichen gleich große Durchströmungsquerschnitte der Unterkanäle auf. Dadurch wird eine besonders gleichgerichtete und verwirbelungsarme Durchströmung bedingt.

In einer alternativen Ausführungsform weist der Kanal zumindest eine zweite Trennwand auf, die sich parallel zur Hauptströmungsrichtung und senkrecht zur ersten Trennwand erstreckt. Somit wird die Anzahl der Teilströme verdoppelt, was eine weitere Unterteilung, insbesondere eine Halbierung der Durchströmungsquerschnitte der Unterkanäle und eine Führung der Teilströme und dadurch eine weitere Verringerung der Verwirbelungen bedingt.

In einer verbesserten Ausführungsform weist der Kanal eine Einschnürung auf, stromabwärts derer sich zumindest eine zweite Trennwand parallel zur Hauptströmungsrichtung und senkrecht zu einer Ebene entlang des Querschnitts der Einschnürung mit minimalem Durchmesser erstreckt.
Durch die Einschnürung entsteht der Effekt einer Düse, wodurch zusätzlich ein Rückströmen vermindert wird. Zudem werden Pulsationen verringert. Die zweite Trennwand teilt den Massenstrom und vermindert Verwirbelungen hinter der Einschnürung.

In einer optimierten Ausführungsform sind im Kanal zwei zweite Trennwänden angeordnet, deren Abstand dem geringsten Abstand der den Kanal begrenzenden Wände an der Einschnürung entspricht.
Die durch die Einschnürung auftretenden Verwirbelungen werden so besonders effektiv vermindert.

In einer alternativen Ausführungsform sind im Kanal zwei zweite Trennwände in Hauptströmungsrichtung in Verlängerung zweier maximal geöffneter Klappenelemente des Rückschlagventils angeordnet.
Somit werden die Verwirbelungen durch die Kanten der Blattfederelemente besonders effektiv vermindert.

Vorzugsweise ist ein stromabwärtiges Ende der zumindest einen zweiten Trennwand stromaufwärts eines stromabwärtigen Endes der ersten Trennwand angeordnet, wodurch Verwirbelungen hinter den Trennwänden höchstens stufenweise erfolgen und dadurch besonders effektiv vermindert werden.

In einer alternativen Ausführungsform sind die stromaufwärtigen Enden der Trennwände parallel zum Austrittsquerschnitt des Rückschlagventils angeordnet.
Dadurch wird eine zeitgleiche und gleichmäßige Trennung des Abgasstroms in Teilströme erreicht.

In einer weiteren bevorzugten Ausführungsform sind die Trennwände als Blecheinlegeteil ausgebildet. Blecheinlegeteile sind einfach und kostengünstig herzustellen und können an bestehende Gehäuse angepasst und einfach nachgerüstet werden.

In einer alternativen Ausführung sind die Trennwände als Spritz-, Sand- oder Druckgussteil ausgebildet.
Dadurch wird die Montage vereinfacht und die Form der Trennwände kann variiert werden.

In einer weiteren bevorzugten Ausführungsform sind die Trennwände zumindest teilweise einteilig mit dem Gehäuse ausgebildet, wodurch die Anzahl der Teile verringert wird was den Zusammenbau vereinfacht.

Somit wird eine kompakte Anordnung zur Abgasrückführung geschaffen, die Pulsationen und Druckverluste minimiert und einen gleichgerichteten Abgasmassenstrom erzeugt. Durch die geringe Anzahl von Trennwänden wird eine Anlagerung von Rückständen und eine damit verbundene Verringerung des Durchströmungsquerschnitts dauerhaft verhindert.

Weitere wesentliche Merkmale und zwei bevorzugte Ausführungsformen werden im Folgenden anhand der Figur beschrieben.
Figur 1 zeigt eine Seitenansicht einer erfindungsgemäßen Anordnung zur Abgasrückführung in teilgeschnittener Darstellung.
Figur 2 zeigt eine um 90° Grad gedrehte Seitenansicht der erfindungsgemäßen Anordnung zur Abgasrückführung der Figur 1 in geschnittener Darstellung.
Figur 3 zeigt eine Seitenansicht einer alternativen erfindungsgemäßen Anordnung zur Abgasrückführung in teilgeschnittener Darstellung.

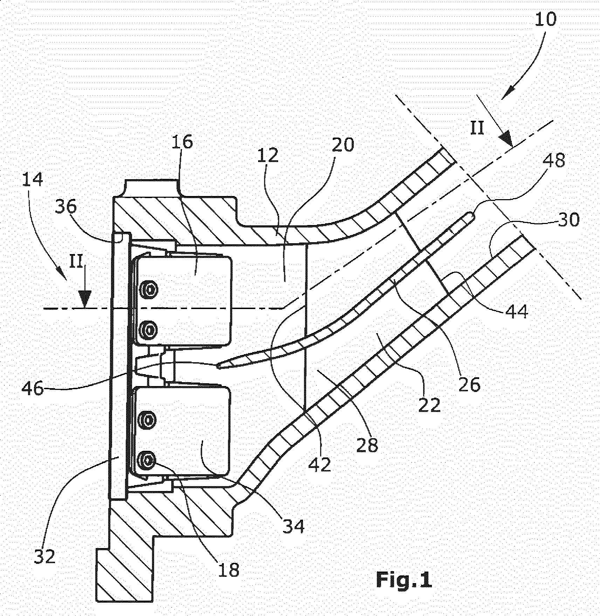

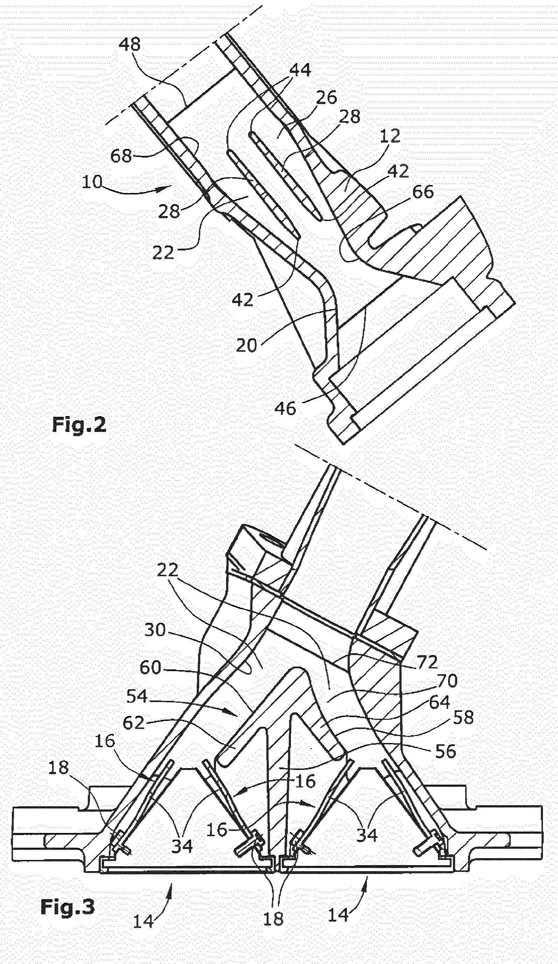

In Figur 1 und Figur 2 ist eine erfindungsgemäße Anordnung zur Abgasrückführung 10 dargestellt, die ein Gehäuse 12 mit einem Kanal 20 aufweist, an dessen stromaufwärtigen Ende ein Rückschlagventil 14 angeordnet ist.
Stromabwärts des Rückschlagventils 14 weist der Kanal 20 eine stetige Umlenkung in der Schnittebene der Figur 1 auf, wobei sich der Durchmesser des Kanals 20 in der Schnittebene der Figur 1 entlang der Umlenkung bis zum Ende der Umlenkung stetig verringert.
Im Kanal 20 sind eine erste Trennwand 26 und dazu senkrecht zwei zweite Trennwände 28 angeordnet, die den Kanal 20 in sechs etwa gleich große Unterkanäle 22 mit in etwa gleich großen Durchströmungsquerschnitten aufteilen.
Das Rückschlagventil 14 weist einen Ventilkörper 32 auf und ist als vierflutiges Klappenventil ausgebildet, wobei je zwei Klappenelemente 16 trapezförmig zueinander und nebeneinander angeordnet sind.
Jedes Klappenelement 16 weist eine nicht dargestellte Durchtrittsöffnung im Ventilkörper 32 auf, auf der ein nicht dargestelltes Blattfederelement und ein die Öffnung des Blattfederelements begrenzender Gegenhalter 34 mittels Schrauben 18 befestigt ist.
Das Rückschlagventil 14 ist im Gehäuse 12 mit nicht dargestellten Befestigungsmitteln fixiert, wobei ein Teil des Ventilkörpers 32 als Dichtfläche 36 zum Gehäuse 12 ausgebildet ist.
Dabei ist die erste Trennwand 26 so angeordnet, dass sie den Durchströmungsquerschnitt des Kanals 20 im Ausströmungsbereich der Rückschlagventile 14 halbiert. Dabei ist ein stromaufwärtiges Ende 46 der ersten Trennwand 26 stromabwärts der durch die Schrauben 18 mit dem Ventilkörper 32 verbundenen Seite der Blattfederelemente und Gegenhalter 34 und stromaufwärts der dieser entgegengesetzten Seite angeordnet. Die erste Trennwand 26 erstreckt sich stromabwärts entlang der Umlenkung im Wesentlichen parallel zur Hauptströmungsrichtung.

Wie in Figur 2 zu sehen ist, verringert sich in der Umlenkungsebene der Durchmesser des Kanals 20 stetig bis zu einem Querschnitt maximaler Einschnürung 66 so weit, dass dort der minimale Durchströmungsquerschnitt weitgehend der Summe der maximal geöffneten Öffnungsquerschnitte der stromaufwärts angeordneten Klappenelemente 16 entspricht. Stromabwärts des Querschnitts maximaler Einschnürung 66 vergrößert sich der Durchströmungsquerschnitt stetig bis zu einem Punkt maximalen Durchströmungsquerschnitts 68 stromabwärts dessen weitere Bauteile der Abgasrückführung ausgebildet sein können.
Parallel zur Umlenkungsebene sind zwei zweite Trennwände 28 ausgebildet die sich stromabwärts des Querschnitts maximaler Einschnürung 66 parallel zur Hauptströmungsrichtung und in Verlängerung des minimalen Querschnitts der Einschnürung erstrecken, wobei zwei stromaufwärtige Enden 42 der zweiten Trennwände 28 stromabwärts des stromaufwärtigen Endes 46 der ersten Trennwand 26 angeordnet sind.
Dabei sind die stromaufwärtigen Enden 42, 46 parallel zum Austrittsquerschnitt des Rückschlagventils 14 angeordnet.
Zwei stromabwärtige Enden 44 der zweiten Trennwände 28 sind stromaufwärts eines stromabwärtigen Endes 48 der ersten Trennwand 26 angeordnet, wobei die stromabwärtigen Enden 44, 48 der Trennwände 26, 28 senkrecht zur Hauptströmungsrichtung ausgebildet sind.

Das rückgeführte Abgas strömt durch die im Ventilkörper 32 ausgebildeten Durchtrittsöffnungen der vier Klappenelemente 16 des Rückschlagventils 14 sobald ein ausreichend großer Druck vorhanden ist, um die Blattfederelemente der Klappenelemente 16 zu öffnen. Hinter den und bedingt durch die Klappenelemente 16 treten Verwirbelungen auf. Durch die erste Trennwand 26 wird der Abgasstrom schon frühzeitig im Ausströmungsbereich der Klappenelemente 16 in zwei Teilströme getrennt und der Kanal 20 in zwei annähernd gleich große Unterkanäle 22 aufgeteilt. Die Führung des Abgasstroms entlang der Umlenkung erfolgt durch die Wand 30 des Kanals 20 sowie die Trennwände 26, 28. Dabei verläuft schon im Ausströmungsbereich der Klappenelemente 16 die Wand 30 nah an den Klappenelementen 16 um wirbelfördernde Räume zu minimieren. Stromabwärts des Querschnitts maximaler Einschnürung 66 wird der Abgasstrom durch die zweiten Trennwände 28 weiter in Teilströme aufgeteilt. Stromabwärts der Umlenkung hinter den stromabwärtigen Enden 44 der zweiten Trennwände 28 vereinen sich die sechs Teilströme wieder in zwei Teilströme und stromabwärts davon, hinter dem stromabwärtigen Ende 48 der ersten Trennwand 26 in einem wirbelfreien und gleichgerichteten Hauptabgasstrom.

Durch die frühzeitige Trennung des Abgasstroms in Teilströme durch die erste Trennwand 26, die der Form des Rückschlagventils 14 angepasste Kontur des Kanals 20, die Verengung des Kanals 20 und die zweiten Trennwände 28 sowie die Vermeidung jeglicher Querschnittssprünge wird eine platzsparende, nicht geradlinige ausgebildete Anordnung zur Abgasrückführung, die trotz Umlenkung eine weitgehend gleichgerichtete Strömung aufweist und dadurch die Druckverluste bei der Abgasrückführung minimiert, geschaffen.

Die alternative, in Figur 3 dargestellte Anordnung zur Abgasrückführung unterscheidet sich von der ersten vor allem dadurch, dass zwei Rückschlagventile 14 nebeneinander so angeordnet sind, dass die Dichtflächen 36 der beiden Rückschlagventile 14 in einer Ebene liegen. Jedes Rückschlagventil weist je vier Klappenelemente 16 auf, wobei jeweils zwei Klappenelemente 16 zueinander trapezförmig und nebeneinander angeordnet sind. Hierbei sind die Rückschlagventile so angeordnet, dass sich die jeweils inneren Klappenelemente 16 der beiden Rückschlagventile 14 gegenüber liegen.

Zwischen den beiden Rückschlagventilen 14 ist statt einer ersten Trennwand 26 ein pfeilförmiges Einbauelement 54 mit Pfeilarmen 62, 64 angeordnet, dessen Pfeilschaft 56 sich weitgehend senkrecht zu den Ausströmungsquerschnitten der Klappenelemente 16 der Rückschlagventile 14 erstreckt, wobei am stromaufwärtigen Ende des Pfeilschafts 56 Dichtflächen für die zueinander weisenden Seiten der Rückschlagventile 14 ausgebildet sind.
Die Pfeilarme 62, 64 erstrecken sich stromaufwärts in Richtung der stromabwärtigen Enden der sich bei Durchströmung öffnenden Blattfederelementen der einander gegenüberliegenden Klappenelementen 16. Zumindest die Pfeilarme 62, 64 des Einbauelementes 54 erstrecken sich über die gesamte Breite des Kanals 20 und bis nah an die Gegenhalter 34 der zueinander weisenden Klappenelemente 16.
Die Außenflächen 58, 60 der Pfeilarme 62, 64 sind so ausgebildet, dass die Durchströmungsquerschnitte der Unterkanäle 22, die durch die Außenflächen 58, 60 und die ihnen zugewandten Abschnitte der Wand 30 gebildet werden, zumindest an den stromaufwärtigen und stromabwärtigen Enden der Unterkanäle 22 gleich groß sind. Zudem sind die Krümmungen der Außenflächen 58, 60 und der zugewandten Wandabschnitte stetig.

Durch die paarweise trapezförmig zueinander und nebeneinander angeordneten Klappenelemente 16 und die zueinander weisenden Klappenelemente 16 der zwei Rückschlagventile 14 entstehen Verwirbelungen erzeugende Räume. Diese werden durch an den der Wand 30 zugewandten Klappenelementen 16 durch sich nah entlang der Gegenhalter 34 erstreckende Abschnitte der Wand 30 minimiert. Der zwischen den zueinander weisenden Klappenelementen 16 liegende Hohlraum wird durch die Pfeilarme 62, 64 minimiert. Dadurch werden die Teilströme geleitet und es wird den Teilströmen kein Raum zur Bildung von Verwirbelungen gegeben.
Zudem ist die zweite Trennwand 70 parallel zur Umlenkungsebene und zur Hauptströmungsrichtung ausgebildet wobei ihr stromabwärtiges Ende 72 stromabwärts des pfeilförmiges Einbauelement 54 und senkrecht zur Hauptströmungsrichtung angeordnet ist. Die zweite Trennwand 70 erstreckt sich stromaufwärts durch die Unterkanäle 22 und bis über die stromaufwärtigen Enden der Gegenhalter 34 hinaus, so dass schon im Ausströmbereich der Rückschlagventile 14 eine erste Trennung in vier Teilströme der zueinander trapezförmig angeordneten Klappenelemente 14 erfolgt.

Dadurch strömt das Abgas verwirbelungsarm durch die vier Unterkanäle 22, statt durch den Verwirbelungen erzeugenden, nicht gradlinig ausgebildeten Kanal 20. So können die Druckverluste minimiert werden und somit die Strömungsmengen erhöht werden. Die daraus resultierenden, gesteigerten Abgasrückführraten führen zu einer Effizienzsteigerung des Verbrennungsmotors.

Es sollte deutlich sein, dass der Schutzbereich der vorliegenden Anmeldung nicht auf die beschriebenen Ausführungsbeispiele beschränkt ist.
Denkbar wären auch andere, leicht abweichende Bauformen der Trennwände und Ausbildungen der Einbauelemente, die mit Hilfe von Strömungssimulationen errechnet werden, wie auch Kombinationen aus Einbauelementen und Trennwänden.
Auch sind Ausführungen mit vier, sechs, acht oder mehr Klappenelementen oder mehreren Rückschlagventilen und der korrespondierenden Anzahl von Unterkanälen vorstellbar.

## Patentansprüche

1. Anordnung zur Abgasrückführung für eine Verbrennungskraftmaschine mit
einem Gehäuse (12),
mindestens einem im Gehäuse (12) angeordneten Rückschlagventil (14) mit Klappenelementen (16) und einem Kanal (20) mit zumindest einer Umlenkung
**dadurch gekennzeichnet, dass**
die Umlenkung des Kanals (20) im Gehäuse (12) stetig ist und sich stromabwärts des Rückschlagventils (14) mindestens eine Trennwand (26, 28) entlang der Umlenkung erstreckt und den Kanal (20) in Unterkanäle (22) aufteilt.

2. Anordnung zur Abgasrückführung nach Anspruch 1,
**dadurch gekennzeichnet, dass**
jedes Klappenelement (16) eine Durchtrittsöffnung aufweist, auf der ein Blattfederelement und ein die Öffnung des Blattfederelements begrenzender Gegenhalter (34) mittels Schrauben (18) befestigt ist.

3. Anordnung zur Abgasrückführung nach Anspruch 1 oder 2,
**dadurch gekennzeichnet, dass**
das Rückschlagventil (14) aus zwei, zueinander trapezförmig angeordnet Klappenelementen (16) besteht.

4. Anordnung zur Abgasrückführung nach Anspruch 3,
**dadurch gekennzeichnet, dass**
mehrere, jeweils zueinander trapezförmig angeordnete Klappenelemente (16) der Rückschlagventile (14) in einer Reihe angeordnet sind.

5. Anordnung zur Abgasrückführung nach einem der vorangegangenen Ansprüche,
**dadurch gekennzeichnet, dass**
im Gehäuse (12) mehrere Rückschlagventile (14) angeordnet sind und ein stromaufwärtiges Ende (46) der zumindest einen ersten Trennwand (26) im Ausströmbereich der Rückschlagventile (14) zwischen den Rückschlagventilen (14) angeordnet ist.

6. Anordnung zur Abgasrückführung nach einem der vorangegangenen Ansprüche,
**dadurch gekennzeichnet, dass**
senkrecht zu der Ebene in der die Umlenkung ausgebildet ist die erste Trennwand (26) angeordnet ist, die sich vom Ausströmungsbereich der Klappenelemente (16) bis mindestens zum Ende der Umlenkung erstreckt, so dass sie den Kanal (20) in Unterkanäle (22) aufteilt, die an einem stromaufwärtigen und einem stromabwärtigen Ende (44, 48) der ersten Trennwand (26) im Wesentlichen gleich große Durchströmungsquerschnitte der Unterkanäle (22) aufweisen.

7. Anordnung zur Abgasrückführung nach einem der vorangegangenen Ansprüche,
**dadurch gekennzeichnet, dass**
die erste Trennwand (26) eine stetige Krümmung aufweist.

8. Anordnung zur Abgasrückführung nach Anspruch 7,
**dadurch gekennzeichnet, dass**
die erste Trennwand (26) in einem stromabwärtigen Endbereich parallel zu einer Hauptströmungsrichtung im Kanal (20) verläuft.

9. Anordnung zur Abgasrückführung nach einem der Ansprüche 1 bis 5,
**dadurch gekennzeichnet, dass**
die erste Trennwand (26) als pfeilförmiges Einbauelement (54) ausgebildet ist und sich der Pfeilschaft (56) vom Anfang des Kanals (20) bis mindestens zum stromabwärtigen Ende der Klappenelemente (16) erstreckt, wobei die der Wand (30) zugewandten Außenflächen (58, 60) der Pfeilarme (62, 64) eine Krümmung in derselben Richtung wie die Konturen der jeweils benachbarten Wand aufweisen.

10. Anordnung zur Abgasrückführung nach Anspruch 9,
**dadurch gekennzeichnet, dass**
die durch die Wand (30) und die der Wand (30) zugewandten Außenflächen (58, 60) der Pfeilarme (62, 64) gebildeten Unterkanäle (22) an ihren stromaufwärtigen und stromabwärtigen Enden im Wesentlichen gleich große Durchströmungsquerschnitte aufweisen.

11. Anordnung zur Abgasrückführung nach einem der vorangegangenen Ansprüche,
**dadurch gekennzeichnet, dass**
der Kanal (20) zumindest eine zweite Trennwand (28) aufweist, die sich parallel zur Hauptströmungsrichtung und senkrecht zur ersten Trennwand (26) erstreckt.

12. Anordnung zur Abgasrückführung nach einem der Ansprüche 1-11,
**dadurch gekennzeichnet, dass**
der Kanal (20) eine Einschnürung aufweist, stromabwärts derer sich zumindest eine zweite Trennwand (28) parallel zur Hauptströmungsrichtung und senkrecht zu einer Ebene entlang des Querschnitts der Einschnürung mit minimalem Durchmesser erstreckt.

13. Anordnung zur Abgasrückführung nach Anspruch 12,
**dadurch gekennzeichnet, dass**
im Kanal (20) zwei zweite Trennwände (28) angeordnet sind, deren Abstand dem geringsten Abstand der den Kanal begrenzenden Wände an der Einschnürung entspricht.

14. Anordnung zur Abgasrückführung nach Anspruch 12 oder 13,
**dadurch gekennzeichnet, dass**
im Kanal (20) zwei zweite Trennwände (28) in Hauptströmungsrichtung in Verlängerung zweier maximal geöffneter Klappenelemente (16) des Rückschlagventils (14) angeordnet sind.

15. Anordnung zur Abgasrückführung nach einem der vorangegangenen Ansprüche,
**dadurch gekennzeichnet, dass**
ein stromabwärtiges Ende (44) der zumindest einen zweiten Trennwand (28) stromaufwärts eines stromabwärtigen Endes (48) der ersten Trennwand (26) angeordnet ist.

16. Anordnung zur Abgasrückführung nach einem der vorangegangenen Ansprüche,
**dadurch gekennzeichnet, dass**
die stromaufwärtigen Enden (46, 42) der Trennwände (26, 28) sich parallel zum Austrittsquerschnitt des Rückschlagventils (14) erstrecken.

17. Anordnung zur Abgasrückführung nach einem der vorangegangenen Ansprüche,
**dadurch gekennzeichnet, dass**
die Trennwände (26, 28) und/oder das pfeilförmiges Einbauelement (54) als Blecheinlegeteil ausgebildet sind.

18. Anordnung zur Abgasrückführung nach einem der Ansprüche 1-16,
**dadurch gekennzeichnet, dass**
die Trennwände (26, 28) und/oder das pfeilförmiges Einbauelement (54) als Spritz-, Sand- oder Druckgussteil ausgebildet sind.

19. Anordnung zur Abgasrückführung nach Anspruch 18,
**dadurch gekennzeichnet, dass**
die Trennwände (26, 28) und/oder das pfeilförmiges Einbauelement (54) zumindest teilweise einteilig mit dem Gehäuse (12) ausgebildet sind.

## Claims

1. Exhaust gas recirculation system for an internal combustion engine, comprising
a housing (12),
at least one check valve (14) arranged in the housing (12) and having flap elements (16) and a channel (20) with at least one deflection,
**characterized in that**
the deflection of the channel (20) in the housing (12) is continuous, and that a partition wall (26, 28) extends downstream of the check valve (14) along the deflection and divides the channel (20) into sub-channels (22).

2. Exhaust gas recirculation system of claim 1, **characterized in that** each flap element (16) has a passage opening on which a leaf spring element and a counter holder (34) limiting the opening of the leaf spring element are fastened by means of screws (18).

3. Exhaust gas recirculation system of claim 1 or 2, **characterized in that** the check valve (14) is formed by two flap elements (16) arranged in a trapezoidal shape with respect to each other.

4. Exhaust gas recirculation system of claim 3, **characterized in that** a plurality of flap elements (16) of the check valves (14) is arranged in a row, the flap elements respectively being arranged in a trapezoidal shape with respect to each other.

5. Exhaust gas recirculation system of one of the preceding claims,
**characterized in that** a plurality of check valves (14) is arranged in the housing (12) and an upstream end (46) of the at least one first partition wall (26) is arranged in the outflow region of the check valves (14).

6. Exhaust gas recirculation system of one of the preceding claims,
**characterized in that** the first partition wall (26) is arranged perpendicularly to the plane in which the deflection is formed, said wall extending from the outflow region of the flap elements (16) up to at least the end of the deflection, so that it divides the channel (20) into sub-channels (22), which sub-channels (22) have throughflow cross sections of substantially equal size at an upstream and a downstream end (44, 48) of the first partition wall (26).

7. Exhaust gas recirculation system of one of the preceding claims,
**characterized in that** the first partition wall (26) has a continuous curvature.

8. Exhaust gas recirculation system of one of the preceding claims,
**characterized in that**, in a downstream end portion, the first partition wall (26) extends in parallel to a main flow direction in the channel (20).

9. Exhaust gas recirculation system of one of claims 1 to 5, **characterized in that** the first partition wall (26) is designed as an arrow-shaped built-in component (54) and the arrow shaft (56) extends from the beginning of the channel (20) up to at least the downstream end of the flap elements (16), wherein the outer surfaces (58, 60) of the arrow arms (62, 64) facing the wall (30) are curved in the same direction as the contours of the respective adjacent wall.

10. Exhaust gas recirculation system of claim 9, **characterized in that** sub-channels (22) formed by the wall (30) and by the outer surfaces (58, 60) of the arrow arms (62, 64) facing the wall (30) have throughflow cross sections of substantially equal size at their upstream and downstream ends.

11. Exhaust gas recirculation system of one of the preceding claims,
**characterized in that** the channel (20) has at least one second partition wall (28) extending in parallel with main flow direction and perpendicularly to the first partition wall (26).

12. Exhaust gas recirculation system of one of claims 1 to 11, **characterized in that** the channel (20) has a constriction downstream of which the at least one second partition wall (28) extends in parallel with the main flow direction and perpendicularly to a plane along the cross section of the constriction with a minimum diameter.

13. Exhaust gas recirculation system of claim 12, **characterized in that** two second partition walls (28) are arranged in the channel (20), the distance between these walls corresponding to the smallest distance between the walls delimiting the channel at the constriction.

14. Exhaust gas recirculation system of claim 12 or 13, **characterized in that** two second partition walls (28) are arranged in the main flow direction in projection of two flap elements (16) of the check valve (14) opened to the maximum.

15. Exhaust gas recirculation system of one of the preceding claims,
**characterized in that** a downstream end (44) of the at least one second partition wall (28) is arranged upstream of a downstream end (48) of the first partition wall (26).

16. Exhaust gas recirculation system of one of the preceding claims,
**characterized in that** the upstream ends (46, 42) of the partition walls (26, 28) extend in parallel with the outlet cross section of the check valve (14).

17. Exhaust gas recirculation system of one of the preceding claims,
**characterized in that** the partition walls (26, 28) and/or the arrow-shaped built-in element (54) are designed as sheet metal insert parts.

18. Exhaust gas recirculation system of one of claims 1 to 16, **characterized in that** the partition walls (26, 28) and/or the arrow-shaped built-in element (54) are designed as parts made by injection molding, sand casting or die casting.

19. Exhaust gas recirculation system of claim 18, **characterized in that** the partition walls (26, 28) and/or the arrow-shaped built-in element (54) are designed as are at least partly formed integrally with the housing (12).

## Revendications

1. Dispositif destiné à la recirculation des gaz d'échappement pour un moteur à combustion interne, comprenant
un carter (12),
au moins un clapet anti-retour (14) avec éléments de clapet (16), disposé dans le carter (20), et un canal (20) avec au moins une déviation,
**caractérisé en ce que** la déviation du canal (20) dans le carter (12) est constante, et qu'au moins une paroi de séparation (26, 28) s'étend en aval du clapet anti-retour (14) le long de la déviation et part le canal (20) en sous-canaux (22).

2. Dispositif destiné à la recirculation des gaz d'échappement selon la revendication 1, **caractérisé en ce que** chaque élément de clapet (16) a une ouverture de passage sur laquelle sont fixés, par des vis (18), un élément de ressort en feuille et un contre-appui (34) délimitant l'ouverture dudit élément de ressort en feuille.

3. Dispositif destiné à la recirculation des gaz d'échappement selon la revendication 1 ou 2, **caractérisé en ce que** le clapet anti-retour (14) est formé par deux éléments de clapet (16) disposés de manière trapézoïdale l'un par rapport à l'autre.

4. Dispositif destiné à la recirculation des gaz d'échappement selon la revendication 3, **caractérisé en ce que** plusieurs éléments de clapet (16) du clapet anti-retour (14), chacun disposés de manière trapézoïdale l'un par rapport à l'autre, sont disposés dans une rangée.

5. Dispositif destiné à la recirculation des gaz d'échappement selon l'une quelconque des revendications précédentes, **caractérisé en ce que** plusieurs clapets anti-retour (14) sont disposés dans le carter (12) et qu'une extrémité amont (46) de la au moins une première paroi de séparation (26) est disposée dans la région de sortie des clapets anti-retour (14) entre les clapets anti-retour (14).

6. Dispositif destiné à la recirculation des gaz d'échappement selon l'une quelconque des revendications précédentes, **caractérisé en ce que** la première paroi de séparation (26) est disposée perpendiculairement au plan dans lequel est formé la déviation, la paroi s'étendant de la région de sortie des éléments de clapet (16) au moins jusqu'à l'extrémité de la déviation de sorte qu'elle part le canal (20) en sous-canaux (22), les sous-canaux (22) ayant des sections transversales d'écoulement sensiblement égales entre eux aux extrémités amont et aval (44, 48) de la première paroi de séparation (26).

7. Dispositif destiné à la recirculation des gaz d'échappement selon l'une quelconque des revendications précédentes, **caractérisé en ce que** la première paroi de séparation (26) présente une courbure constante.

8. Dispositif destiné à la recirculation des gaz d'échappement selon la revendication 7, **caractérisé en ce que**, dans une région d'extrémité aval, la première paroi de séparation (26) s'étend en parallèle avec une direction d'écoulement principale dans le canal (20).

9. Dispositif destiné à la recirculation des gaz d'échappement selon l'une quelconque des revendications 1 à 5, **caractérisé en ce que** la première paroi de séparation (26) est agencée sous forme d'un élément à monter (54) en forme de flèche et que la tige de la flèche (56) s'étend du début du canal (20) au moins jusqu'à l'extrémité aval des éléments de clapet (16), les surfaces extérieures (58, 60) des bras de la flèche (62, 64) tournées vers la paroi (30) étant courbées dans la même direction que les contours de la paroi adjacente respective.

10. Dispositif destiné à la recirculation des gaz d'échappement selon la revendication 9, **caractérisé en ce que** les sous-canaux (22) formés par la paroi (30) et les surfaces extérieures (58, 60) des bras de la flèche (62, 64) tournées vers la paroi (30) ont des sections transversales d'écoulement sensiblement égales entre eux à leurs extrémités amont et aval.

11. Dispositif destiné à la recirculation des gaz d'échappement selon l'une quelconque des revendications précédentes, **caractérisé en ce que** le canal (20) comprend au moins une deuxième paroi de séparation (28) s'étendant en parallèle à la direction d'écoulement principale et perpendiculairement à la première paroi de séparation (26).

12. Dispositif destiné à la recirculation des gaz d'échappement selon l'une quelconque des revendications 1 à 11, **caractérisé en ce que** le canal (20) a un rétrécissement, en aval duquel au moins une deuxième paroi de séparation (28) s'étend en parallèle à la direction d'écoulement principale et perpendiculairement à un plan le long de la section transversale du rétrécissement avec un diamètre minimal.

13. Dispositif destiné à la recirculation des gaz d'échappement selon la revendication 11, **caractérisé en ce que** deux deuxièmes parois de séparation (28) sont disposées dans le canal (20), la distance entre les parois correspondant à la plus petite distance entre les parois délimitant le canal au rétrécissement.

14. Dispositif destiné à la recirculation des gaz d'échappement selon la revendication 12 ou 13, **caractérisé en ce que**, dans le canal (20), deux deuxièmes parois de séparation (28) sont disposées dans la direction d'écoulement principale dans le prolongement de deux éléments de clapet (16) du clapet anti-retour (14) en position d'ouverture maximale.

15. Dispositif destiné à la recirculation des gaz d'échappement selon l'une quelconque des revendications précédentes, **caractérisé en ce qu'**une extrémité (44) aval de ladite au moins une deuxième paroi de séparation (28) est disposée en amont d'une extrémité (48) aval de la première paroi de séparation (26).

16. Dispositif destiné à la recirculation des gaz d'échappement selon l'une quelconque des revendications précédentes, **caractérisé en ce que** les extrémités (46, 42) amont des parois de séparation (26, 28) s'étendent en parallèle à la section transversale de sortie du clapet anti-retour (14).

17. Dispositif destiné à la recirculation des gaz d'échappement selon l'une quelconque des revendications précédentes, **caractérisé en ce que** les parois de séparation (26, 28) et/ou ledit élément à monter (54) en forme de flèche sont réalisés comme des pièces d'insertion en tôle.

18. Dispositif destiné à la recirculation des gaz d'échappement selon l'une quelconque des revendications 1 à 16, **caractérisé en ce que** les parois de séparation (26, 28) et/ou ledit élément à monter (54) en forme de flèche sont réalisés comme pièces moulées par injection, par moulage en sable ou par moulage sous pression.

19. Dispositif destiné à la recirculation des gaz d'échappement selon la revendication 18, **caractérisé en ce que** les parois de séparation (26, 28) et/ou ledit élément à monter (54) en forme de flèche sont au moins partiellement formés d'un seul tenant avec le carter (12).
